Europäisches Patentamt

European Patent Office

Office européen des brevets

(11) Numéro de publication: **0 427 649 A1**

# (12) DEMANDE DE BREVET EUROPEEN

(21) Numéro de dépôt: 90430021.7

(22) Date de dépôt: 02.11.90

(51) Int. Cl.5: **G01S 7/52**, G01S 15/04, G10K 11/00

(30) Priorité: 10.11.89 FR 8915013

(43) Date de publication de la demande: **15.05.91 Bulletin 91/20**

(84) Etats contractants désignés: **AT BE CH DE ES GB IT LI LU NL**

(71) Demandeur: **MIDIROBOTS S.A.**
**Labège Innopole, Technoparc Nr 1 Voie Nr 5**
**F-31300 Labège(FR)**

(72) Inventeur: **Girard, François, Midirobots S.A.**
**Labège Innopole, Technoparc No. 1 Voie No 5**
**F-31300 Labège(FR)**
Inventeur: **Hausman, Patrick, Midirobots S.A.**
**Labège Innopole, Technoparc No. 1 Voie No 5**
**F-31300 Labège(FR)**
Inventeur: **Wallard, Jean-Pierre, Midirobots S.A.**
**Labège Innopole, Technoparc No. 1 Voie No 5**
**F-31300 Labège(FR)**

(74) Mandataire: **Moretti, René et al**
**c/o Cabinet BEAU DE LOMENIE**
**"Prado-Mermoz" 232, Avenue du Prado**
**F-13008 Marseille(FR)**

(54) Dispositif de détection d'objets par capteurs ultrasoniques.

(57) Le dispositif de détection d'objets suivant l'invention comprend des capteurs ultrasoniques comportant deux transducteurs (3) noyés dans un bloc (2) de matériau souple et absorbant constituant le corps du capteur. Un des deux transducteurs est émetteur ($3_2$)( et l'autre récepteur ($3_1$), leur axe $A_1$ et $A_2$ sont parallèles et chacun desdits transducteurs est logé dans un insert cônique (4) en matériau de densité importante, fixé dans ledit bloc (2) de matériau et dont l'angle $\alpha$ est compris entre 45 et 90°. Le diamètre extérieur (6) est au moins dans le plan de la face externe (5) du transducteur (3). Plusieurs desdits capteurs (1) peuvent être associés sur un même support pour former une ceinture sur celui-ci, assurant une couverture de surveillance optimale.

Fig. 1

## DISPOSITIF DE DÉTECTION D'OBJETS PAR CAPTEURS ULTRASONIQUES

La présente invention a pour objet un dispositif de détection d'objets par capteurs ultrasoniques. Le secteur technique de l'invention est la fabrication de capteurs ultrasoniques et de l'électronique de commande associée.

Une des applications principales de l'invention est son utilisation pour l'aide à la navigation de robots devant se déplacer dans un site connu ou non et dans lequel des obstacles inconnus peuvent se présenter sur la trajectoire dudit robot.

On connait en effet divers système d'aide à la navigation embarqué à bord de mobiles afin d'une part de détecter des obstacles et d'autre part de positionner le mobile par rapport à ceux-ci pour choisir une trajectoire d'évitement. On peut citer par exemple pour cela les systèmes de type radars dont le faisceau d'ondes balaye l'environnement et dont le récepteur capte les échos : l'analyse de ceux-ci permet, d'une part par leur continuité de connaître la forme de l'obstacle et d'autre part par les temps de trajet des ondes d'en déduire les distances : ce type d'équipement très connu dispose de plusieurs gammes d'appareils plus ou moins performants en distance et/ou en précision, et d'une manière générale il est surtout adapté pour les grandes distances avec des mesures de faible précision. On relève du reste dans ce type de dispositif des brevets concernant des applications essentiellement dans l'aviation ou la marine, tel que celui déposé le 31 mai 1979 par Messieurs DEGRE et LEFEVRE n° FR 2458113 sur "un dispositif de détection et de prévention des risques de collision de la navigation côtière et en hautre mer" ou ceux déposés le 10/11/77 n° FR 2408842 par TELECOMMUNICATION RADIOELECTRIQUES TELEPHONIQUES sur "un dispositif détecteur d'obstacles aéroporté", et le 23/11/71 par UNITED AIRCRAFT CORPORATION sur "un système radar détecteur d'obstacles à faisceau en forme d'éventails croisés" n° FR 2118901.

Quand il s'agit de mesures à plus faible distance comme dans le domaine qui nous intéresse, il est plus couramment utilisé des capteurs ultrasoniques, dont les applications sont du reste multiples et souvent éloignés de notre domaine. En effet, suivant la configuration des capteurs, les fréquences utilisées et les mesures recherchées, et leur usage est très varié : on peut citer par exemple la détection et la mesure de vitesse dans un fluide tel que dans le certificat d'addition n° FR 2614425 du 23/04/87 déposé par Monsieur Jacques NOSLEY sur "un dispositif comportant des capteurs ultrasoniques pour servir à des systèmes de loch mixte électromagnétique et à ultrasons"; on citera également les systèmes de communication en altitude tels que dans le brevet FR 2586875 de Monsieur J. LERAY du 02/09/85 utilisant des transducteurs ultrasoniques cylindriques ; on trouve aussi le brevet FR 2554599 du 08/11/83 déposé par la Régie RENAULT sur "un procédé de dispositif de mesure par ultrasons de vitesse d'avancement par rapport au sol utilisant l'effet Doppler" ; on trouve également le brevet FR 2459477 du 21/06/79 déposé par 3 russes Anikiev, Ponikov et Ripny sur un "capteur ultrasonique pour le contrôle en immersion".

On pourrait aussi citer bien d'autres applications connues comme dans la mesure d'épaisseur ou la détection d'interface entre deux matériaux.

Dans le domaine qui nous concerne plus précisément de détection d'obstacles, on trouve plus particulièrement la demande de brevet n° FR 2622300 déposée le 23/10/87 par Monsieur GALLAND J.Claude sur "un procédé d'amélioration de l'exploration de l'angle mort de la rétrovision du conducteur de véhicule".

Tous ces procédés et dispositifs comme on peut le relever dans leurs descriptifs correspondent donc chacun à une application particulière, et aucun ne peut être utilisé directement d'une application à une autre ; ainsi même dans le domaine de la détection, les capteurs ultrasoniques existants sont très directifs et souvent peu fiables en mesure continue à courte distance ; il faut que l'obstacle éventuel soit juste en face du capteur pour être détecté.

L'usage des capteurs à ultrasons est donc effectivement connu dans le domaine qui nous concerne, mais l'objectif recherché pour l'application envisagée n'est atteint par aucun capteur existant. Il a ainsi fallu trouver un nouveau dispositif et inventer une nouvelle famille de systèmes, dont une série d'essai à permis d'en vérifier les caractéristiques et de les préciser.

En effet le problème posé est de pouvoir d'une part détecter des obstacles dans un environnement très proche du capteur, et d'en mesurer la distance avec la meilleure précision et d'autre part d'avoir une plage de détection la plus grande possible et cela même tout au tour d'un support mobile devant se repérer dans son environnement.

Une solution au problème posé est un dispositif de détection d'objets par capteurs ultrasoniques comportant deux transducteurs noyés dans un bloc de matériau souple et absorbant, constituant le corps du capteur : un des transducteur est émetteur et l'autre récepteur, leur axe sont parallèles et chacun desdits transducteurs est logé dans un insert conique en matériau de densité importante fixé dans ledit bloc de matériau ; leur angle d'ouverture est compris entre 45 et 90 ° et le plan contenant le diamètre extérieur est au moins dans le plan de la face externe du transducteur, et au mieux décalé en avant de celui-ci.

Un objectif de la présente invention est obtenu avec un dispositif comportant au moins 4 capteurs tels que ci-dessus disposés en ceinture d'un support, et symétriques deux à deux par rapport à l'axe de détection choisi ; chaque émetteur est situé à la verticale et soit au-dessous, soit au-dessus du récepteur, les axes de deux au moins desdits capteurs étant parallèles au dit axe de détection, et ceux de deux au moins autres capteurs étant convergents et faisant un angle d'au moins 10° environ avec ledit axe de détection.

Dans un mode préférentiel de réalisation ledits capteurs sont couplés à un circuit électronique de commande qui permet l'émission de trains d'ondes entre 1 et 20 impulsions/secondes avec un gain pseudo progressif.

Le résultat est de nouveaux dispositifs de détection d'objets par capteurs ultrasoniques. Ces dispositifs permettent d'obtenir des résultats de mesure de détection qu'aucun dispositif existant à ce jour ne propose : en effet le fait de séparer les fonctions émission et réception permet tout d'abord des mesures de distances très faibles car sinon il est connu qu'il faut attendre que la vibration de l'émetteur s'arrête pour mesurer un écho ; si celui-ci est très proche il n'est pas possible alors de le percevoir.

De même pour éviter tout phénomène de vibration parasite qui empêcherait la mesure ces échos proches avec une bonne précision et d'autant plus s'ils sont petits, puisque l'objectif est de détecter des objets situés même à 5 cm du capteur avec une précision de l'ordre du cm, et cela jusqu'à 500 cm l'insert en matériau dense est conçu pour ne pas vibrer avec le transducteur.

Le corps du capteur en matériau connu souple et absorbant limite également la transmission des vibrations de l'émetteur directement avec le récepteur, et les choix de leur entraxe et des dimensions des cônes entourant les transducteurs sont déterminés pour réduire le couplage direct entre eux à l'extérieur du capteur, et pour l'obtention d'un diagramme d'ouverture optimale.

Un intérêt de la disposition des capteurs en ceinture suivant les principales caractéristiques décrites est de couvrir le maximum de volume dans lequel on veut pouvoir détecter un objet éventuel sans zone d'ombre aveugle, ce qui pourrait être dangereux dans le cas de support mobile autonome et automatique comme le sont les robots pour lequel la présente invention est un application principale.

Enfin le techniques et les divers dispositifs de réalisation permettent une fabrication économique des capteurs et une installation sur tout mobile ou support avec un maximum de fiabilité et d'efficacité.

Dans le descriptif suivant, nous décrivons un exemple de réalisation de ces dispositifs suivant l'invention, mais d'autres réalisations peuvent être envisagées dans le cadre de celle-ci : les dessins, figures et descriptif n'ont aucun caractère limitatif.

La figure 1 est une vue en coupe partielle d'un capteur suivant l'invention.

La figure 2 est une vue de dessus schématique d'un dispositif de capteur en ceinture sur un support.

La figure 3 est une schéma d'un circuit électronique de contrôle du dispositif.

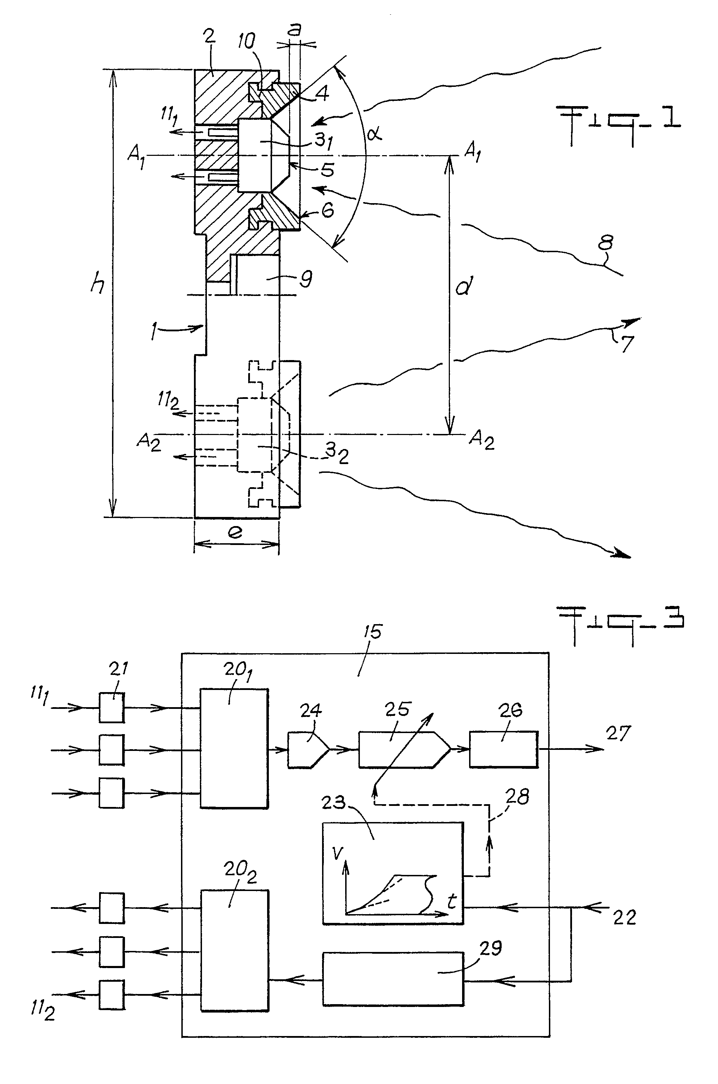

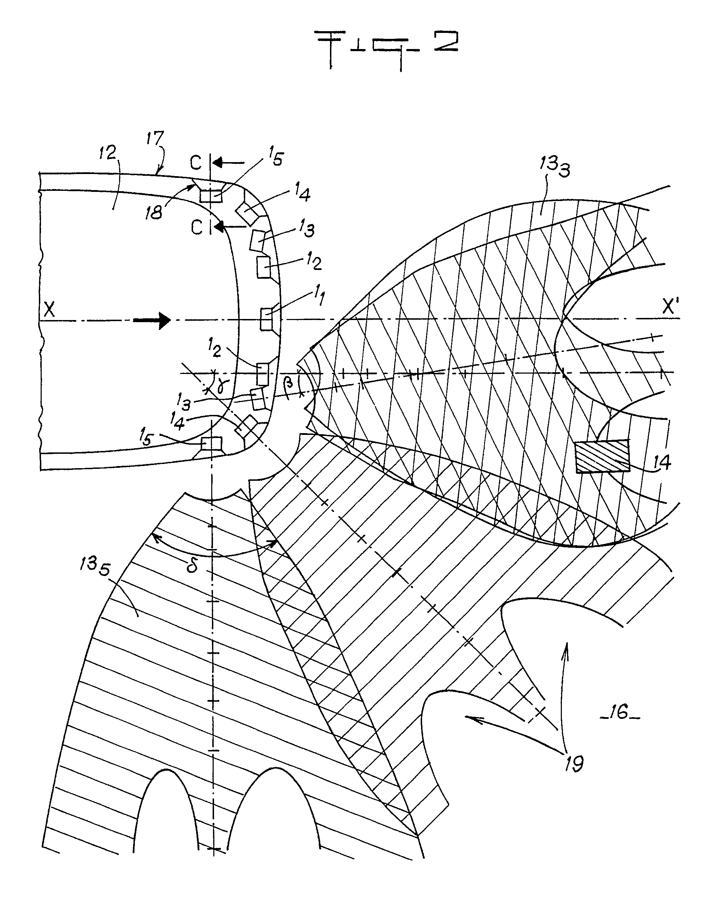

La figure 1 est une vue en coupe CC partielle représentée figure 2 dans le plan médian d'un capteur 1 suivant l'invention : seule la partie supérieure est en coupe et la partie inférieure est en vue extérieure latérale.

Le capteur 1 est constitué de deux transducteurs ultrasoniques $3_1$ et $3_2$ de tout type connu, permettant l'émission de toute onde 7 de fréquence non audible et une portée d'émission d'ultrasons de 5 à 500 cm : un transducteur $3_2$ est spécialisé à l'émission et l'autre $3_1$ à la réception ; de préférence on prend une fréquence de 40 khz environ, et dans une utilisation de détection sur une surface plane ou courbe pour y situer des obstacles, ledit capteur est disposé verticalement comme dans le plan de la figure avec l'émetteur $3_2$ à la partie inférieure pour prendre ledit obstacle le plus bas possible et le récepteur $3_1$ à la partie supérieure. Dans un mode de réalisation où l'on privilégie la détection des obstacles situés en hauteur, l'émetteur $3_2$ est situé à la partie supérieure au-dessus du récepteur $3_1$.

Les axes $A_1$ et $A_2$ des deux transducteurs sont parallèles entre eux et chaque transducteur 3 est logé dans un insert conique 4 en matériau de densité importante tel que l'aluminium, le fer ou en élastomère de grande densité supérieure à 85 shores, et de préférence le laiton. Ces inserts sont fixés ou noyés par ancrage 10 dans le bloc 2 constituant le corps du capteur et réalisé en matériau souple et absorbant tel que de l'élastomère, de dureté par exemple de 65 shores.

L'ensemble du bloc 2 et des assemblages des inserts 4 et des transducteurs 3 est de préférence réalisé, pour des raisons économiques et techniques par moulage par coulée en une seule opération.

Le rôle de l'insert 4 est de canaliser les ultrasons émis par l'émetteur $3_2$ et reçu par le récepteur $3_1$.

L'état de surface de l'intérieur des cônes des inserts 4 doit être suffisamment bon pour permettre une bonne réflexion des ondes ultrasoniques. L'an-

gle $\alpha$ et la profondeur du cône sont déterminés pour obtenir un champ de détection du capteur le plus grand possible sans zone aveugle : il sera retenu ainsi un angle d'ouverture $\alpha$ compris entre 45 et 90° et de préférence entre 50 et 82° avec un optimum à 82° environ ; par ailleurs la profondeur du cône doit être telle que le plan contenant son diamètre extérieur 6 est contenu ou de préférence décalé en avant du plan de la face externe émettrice 5 du transducteur 3, et dans un mode de réalisation particulière, la distance "a" les séparant est de 5 mm environ.

L'entraxe ou distance "d" entre les axes $A_1$ et $A_2$ des 2 transducteurs est déterminée pour réduire le couplage direct à l'extérieur du capteur 1 entre les ondes émises 7 par l'émetteur et celles reçues 8 par le récepteur. On choisit dans un mode de réalisation particulière, une distance d égale au plus à trois fois la valeur du diamètre extérieur 6 de l'insert conique 4 et de préférence égale à deux fois cette valeur.

Les parties coniques des inserts 4 peuvent être symétriques de révolution mais autour des capteurs il peut être disposé un déflecteur disymétrique dans le plan de l'axe préférentiel pour déformer le lobe de couverture du capteur en émission et réception dans le sens de détection recherché, par exemple horizontal ou vertical.

Les transducteurs sont reliés par connexion 11 à une carte électronique de commande définie en figure 3.

A titre d'exemple pour situer les dimensions générales de ces capteurs 1 en regard des caractéristiques définies ci-dessus, son épaisseur e peut être de 20 à 40 mm, par exemple 26 mm, sa hauteur h de 90 à 140 mm, par exemple 111 mm, et sa largeur perpendiculaire au plan de la figure 1, entre 30 et 60 mm, par exemple 43 mm.

La figure 2 est une vue en plan de dessus schématique d'un dispositif comprenant plusieurs capteurs 1 tels que décrits précédemment et disposés en ceinture sur un support 12 : ce support peut être mobile, en particulier un robot autonome se déplaçant dans une direction $xx'$ sur un sol 16 sur lequel peuvent être placés des obstacles 14 que le robot doit détecter pour les éviter.

Pour obtenir une couverture la plus sûre possible dans la direction de cet axe $xx'$, on dispose au moins quatre capteurs 1, qui peuvent être généralement dans un même plan horizontal, symétriquement deux à deux par rapport à l'axe $xx'$ de détection choisi : comme cité précédemment à la figure 1 l'émetteur $3_2$ est situé à la verticale et en dessous du récepteur $3_1$ pour la détection d'objet bas. La fixation des capteurs sur le support 12 peut être assurée par exemple par boulonnage de ceux ci sur la structure grâce à un évidement 9 représenté sur la figure 1 préalablement prévue au centre du corps du capteur entre les deux transducteurs, et un perçage au travers duquel peut passer la tige du boulon. Un carénage 17 peut habiller par ailleurs le support 12 et intégrer alors lesdits capteurs 1 dans des orifices prévus à leur emplacement et disposant de parois 18 faisant déflecteurs autour des capteurs.

De part et d'autre de l'axe $xx'$ on dispose symétriquement donc au moins deux capteurs $1_2$ dont les axes sont parallèles à cet axe de détection, et deux autres $1_3$ de préférence à l'extérieur des premiers et convergents, faisant chacun un angle $\beta$ d'au moins 10° environ avec ledit axe $xx'$ : ceci permet de détecter un petit plan incliné, ce qui est le cas d'un obstacle 14 se présentant sur l'axe $xx'$ ou tout axe parallèle, dont une surface fait un angle, par exemple de 135° avec l'axe $xx'$. Cela permet aussi un recoupement optimum des lobes 13 qui couvrent alors l'ensemble de la zone située en avant du support 12 par recouvrement des zones d'ombres 19 propres à chaque capteur. Ledits lobes 13 ont de préférence un angle d'ouverture $\delta$ de 60° environ : cette ouverture assez large permet justement la couverture du volume de la zone avant par au moins les 4 capteurs ci-dessus ; cet angle est fonction de l'insert conique défini dans la figure 1 et de l'électronique associé défini dans la figure 3.

Le plan horizontal dans lequel se situe la figure 2 et contenant dans notre exemple les capteurs 1 considérés en leur plan médian horizontal est à une distance de 100 à 800 mm par rapport au sol 16 sur lequel on veut détecter des objets 14 pouvant constituer des obstacles au déplacement du support 12 : dans un mode de réalisation préférentiel cette distance est de 450 à 480 mm afin de pouvoir détecter des objets très proches du support jusqu'à 10 cm au moins.

Afin d'augmenter encore la zone de couverture de détection devant le support 12 et de part et d'autre de son axe d'avancement $xx'$, afin de prévoir également des virages possibles de ce support mobile, il peut être disposé au moins sept capteurs 1, soit donc trois en plus des précédents dont l'un $1_1$ situé dans l'axe de détection $xx'$ et deux autre $1_4$ symétriques et divergents par rapport à cet axe, et orientés d'un angle $\tau$ de 45° environ vers l'extérieur.

Pour compléter encore cette ceinture de détection, il peut être rajouté d'autres capteurs $1_5$ sur les parois latérales du support et orientés alors à 90° environ par rapport à l'axe $xx'$ soit par exemple trois par côté, puis 1 ou 3 à l'arrière de l'appareil support 12.

Chaque capteur 1 peut être monté sur un support mécanique orientable permettant de positionner le capteur dans une plage d'au moins 45° avec un pas de discrétisation du degré.

Par ailleurs, ce support mécanique est équipée d'un système de translation, guidé par un système mécanique complémentaire fixé sur le support 12, permettant de positionner le capteur 1 à la demande.

Ces deux systèmes permettent d'optimiser après montage et câblage, le cas échéant, la position des différents capteurs 1 selon les degrés de liberté d'angle et de translation. On notera cependant que la translation est peu utilisable pour les capteurs dits de coin $1_{2:3:4 \text{ et } 5}$.

La figure 3 est un schéma de circuit électronique 15 de contrôle sdu dispositif de capteurs 1 définis précédemment et reliés à ce circuit par les connexions en provenance soit $11_2$ des émetteurs soit $11_1$ des récepteurs. Ces connexions sont reliées respectivement à des systèmes de multiplexage connus $20_2$ et $20_1$, communs à tous les capteurs ou au travers d'un circuit électronique 21 de même nature, propre à chaque capteur qu'il contrôle et, qui peut être fixé directement derrière le capteur sur le bloc 2 de celui-ci, les systèmes de multiplexage $20_1$ et $20_2$ du circuit principal étant alors supprimés: il est dit alors local déporté et permet à ce seul circuit électronique 15 de commande centralisée de stimuler plusieurs desdits capteurs 1 à la fois ; ce circuit 15 comprend des composants connus non décrits ici autrement que par leur fonction, leur réalisation étant connu par un homme de l'art.

Le signal d'émission 22 qui peut être un train d'impulsion entre 1 et 20 impulsions/seconde est introduit dans ledit circuit analogique pour permettre à la sortie, l'émission d'impulsions vers les capteurs avec un gain pseudo progressif tel que représenté sur le graphe 23 qui figure le gain en ordonnée et le temps en abscisse, avec une variation de la pente à l'origine par paliers successifs croissant, créant une ligne brisée jusqu'au seuil maximum.

L'émission est assurée d'une manière connue par un amplificateur 29 puis à travers le multiplexeur $20_2$ qui sélectionne par ailleurs les capteurs concernés, ou directement à tous les circuits déportés 21, et la réception au travers du multiplexeur $20_1$ est amplifiée par un amplificateur différentiel 24 fixe puis un amplificateur variable 25 synchronisé 28 avec le signal d'émission pour être ensuite analysé 26 afin d'en déduire éventuellement un écho d'obstacle et émettre un signal de détection 27 utilisé pour le calcul de la distance, entre par exemple le robot et cet obstacle ; cette information est ensuite exploitée dans tout système de sécurité, tel qu'une alarme et/ou de pilotage.

**Revendications**

1. Dispositif de détection d'objets par capteurs (1) ultrasoniques comportant deux transducteurs (3) noyés dans un bloc (2) souple et absorbant constituant le corps du capteur, dont l'un est émetteur ($3_2$) et l'autre récepteur ($3_1$), et dont les axes $A_1$ et $A_2$ sont parallèles caractérisé en ce que chacun desdits transducteurs est logé dans un insert conique (4) en matériau de densité importante fixé dans ledit bloc (2), dont l'angle $\alpha$ d'ouverture est compris entre 45 et 90° et le plan contenant le diamètre extérieur (6) est contenu ou de préférence décalé en avant du plan de la face externe (5) du transducteur (3).

2. Dispositif de détection d'objets selon la revendication 1 caractérisé en ce que le matériau constituant les inserts (4) est du laiton, et celui constituant le corps (2) du capteur est de l'élastomère.

3. Dispositif de détection d'objets suivant l'une quelconque des revendications 1 et 2 caractérisé en ce que la distance (d) d'entr'axes $A_1$ $A_2$ entre les deux transducteurs est égal au plus à trois fois la valeur du diamètre (6) de l'insert conique (4).

4. Dispositif de détection d'objets suivant l'une quelconque des revendications 1 à 3 caractérisé en ce que l'angle d'ouverture ($\alpha$) des inserts coniques est compris entre 50 et 82° et la distance (a) entre le diamètre extérieur (6) de l'insert conique et la face externe (5) du transducteur (3) est de 5 mm environ.

5. Dispositif de détection d'objets selon l'une quelconque des revendications 1 à 4 caractérisé en ce que ledits transducteurs (3) émettent et reçoivent des fréquences (7) de 40 khz environ et permettent une portée d'émission de 5 à 500 cm.

6. Dispositif de détection d'objets suivant l'une quelconque des revendications 1 à 5 caractérisé en ce qu'il comporte au moins quatre capteurs (1) disposés en ceinture d'un support (12) et symétriques deux à deux par rapport à l'axe de détection choisi (xx'), chaque émetteur ($3_2$) étant situé à la verticale et soit au-dessous, soit au-dessus du récepteur ($3_1$), les axes de deux ($1_2$) au moins desdits capteurs étant parallèles au dit axe de détection (xx'), et ceux de deux au moins autres capteurs ($1_3$) étant convergents et faisant un angle ($\beta$) d'au moins 10° environ avec ledit axe de détection (xx').

7. Dispositif de détection d'objets suivant la revendication 6 caractérisé en ce que le lobe (13) de chaque transducteur (3) a un angle d'ouverture ($\delta$) de 60° environ et ledit plan horizontal dans lequel se situe ledits capteurs (1) est à une distance de 100 à 800 mm par rapport au sol (16) sur lequel on veut détecter ledits objets (14).

8. Dispositif de détection d'objets selon l'une quelconque des revendications 6 et 7 caractérisé en ce qu'il comporte au moins sept capteurs (1) dont l'un ($1_1$) est dans l'axe de détection choisi (xx') et deux

autres ($1_4$) symétriques par rapport à cet axe sont divergents et orientés d'un angle ($\tau$) de 45° environ vers l'extérieur de cet axe (xx').

9. Dispositif de détection d'objets suivant l'une quelconque des revendications 1 à 8 caractérisé en ce que ledits capteurs (1) sont couplés à un circuit électronique (15) de commande qui permet l'émission de trains d'ondes (7), entre 1 et 20 impulsions/seconde avec un gain pseudo progressif.

10. Dispositif de détection d'objet selon l'une quelconque des revendications 1 à 9 caractérisé en ce que chaque capteur (1) dispose d'un circuit électronique (21), dit local déporté, permettant à un seul circuit électronique (15) de commande centralisé de stimuler plusieurs desdits capteurs (1) à la fois.

EP 0 427 649 A1

Fig. 1

Fig. 3

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 186 690 (NISSAN) <br> * Page 1, ligne 115 - page 4, ligne 1; figures 1-9 * <br> --- | 1 | G 01 S 7/52 <br> G 01 S 15/04 <br> G 10 K 11/00 |
| A | PATENT ABSTRACTS OF JAPAN, vol. 8, no. 171 (P-293)[1608], 8 août 1984; & JP-A-59 67 479 (TOYODA CHUO KENKYUSHO K.K.) 17-04-1984 <br> * L'abrégé * <br> --- | 1,2 | |
| A | US-A-3 596 504 (A.E. FREY) <br> * Colonne 2, ligne 56 - colonne 3, ligne 7; figures 1-3 * <br> --- | 1,2 | |
| A | DE-A-3 347 442 (S.W.F.) <br> * Page 24, ligne 25 - page 25, dernière ligne; figure 6 * <br> --- | 1,2,5 | |
| A | US-A-4 674 073 (Y. NARUSE) <br> * Colonne 1, ligne 55 - colonne 2, ligne 2; colonne 2, ligne 43 - colonne 3, ligne 28; figures 1,2,10-16 * <br> --- | 1,6 | |
| A | US-A-4 278 962 (P.H. LIN) <br> * Abrégé; figures 1-5 * <br> --- | 6 | DOMAINES TECHNIQUES RECHERCHES (Int. Cl.5) <br><br> G 01 S <br> G 10 K |
| A | GB-A-2 112 520 (A.D. HEYES) <br> * Abrégé; figure 2 * <br> --- | 6 | |
| A | BE-A- 531 059 (BENDIX) <br> * Page 3, lignes 1-31; figures 1-3 * <br> ----- | 1,2 | |

Le présent rapport a été établi pour toutes les revendications

| Lieu de la recherche | Date d'achèvement de la recherche | Examinateur |
|---|---|---|
| LA HAYE | 15-02-1991 | VAN WEEL E.J.G. |